Europäisches Patentamt

European Patent Office

Office européen des brevets

(11) Numéro de publication: **0 256 301 B1**

# FASCICULE DE BREVET EUROPEEN

(45) Date de publication de fascicule du brevet:
04.09.91

(51) Int. Cl.⁵: **A21C 11/02**

(21) Numéro de dépôt: **87110026.9**

(22) Date de dépôt: **11.07.87**

(54) Machine à estampiller en continu.

(30) Priorité: **07.08.86 CH 3178/86**

(43) Date de publication de la demande:
**24.02.88 Bulletin 88/08**

(45) Mention de la délivrance du brevet:
**04.09.91 Bulletin 91/36**

(84) Etats contractants désignés:
**AT BE CH DE FR GB IT LI LU NL SE**

(56) Documents cités:
**FR-A- 2 261 706** **FR-A- 2 282 806**
**FR-A- 2 547 486** **US-A- 1 659 715**
**US-A- 2 030 598** **US-A- 3 302 592**
**US-A- 3 433 181** **US-A- 3 536 014**
**US-A- 4 417 867**

(73) Titulaire: **SOCIETE DES PRODUITS NESTLE S.A.**
**Case postale 353**
**CH-1800 Vevey(CH)**

(72) Inventeur: **Heck, Ernst**
**Ch. du Motty**
**CH-106 Echandens(CH)**
Inventeur: **Horisberger, Jean**
**Ch. de l'Ormet 11**
**CH-104 Ecublens(CH)**

Rank Xerox (UK) Business Services

## Description

L'invention concerne une machine à estampiller en continu au moins une bande de produits plats ou profilés.

Le problème à la base de la présente invention est de réaliser à haute vitesse, en continu et avec une durée de contact de l'ordre du centième de seconde une empreinte sur un produit plat ou profilé.

L'invention concerne une machine à estampiller en continu au moins une bande de produits plats ou profilés, comprenant un arbre tournant à une vitesse circonférentielle àgale à la vitesse de défilement de la bande et comportant au moins une roue d'estampillage avec au moins une matrice de chauffage, ladite roue étant perpendiculaire à l'axe de l'arbre.

Par estampiller, on entend la réalisation d'une empreinte par transfert de chaleur et surcuisson partielle du produit plat considéré. On peut selon l'invention estampiller tout type de produit alimentaire, en particulier un produit plat obtenu par cuisson-extrusion avec la filière d'extrusion, objet de la demande de brevet Suisse No. 1364/86-2 du 8 avril 1986.

On peut également estampiller avec la machine selon l'invention des produits non alimentaires. Par bande, on entend aussi bien des produits non encore découpés au moment de l'estampillage que des produits déjà découpés.

L'arbre tournant est disposé perpendiculairement à la direction de déplacement du produit plat et le nombre de roues d'estampillage qu'il comporte n'est pas critique. Il est de préférence compris entre 1 et 10. Le nombre de ces roues correspond au nombre de bandes de produit à estampiller. Ces roues sont espacées d'environ une à deux fois la largeur de la bande de produit plat ou profilé.

Le nombre de matrices par roue d'estampillage n'est pas critique. La seule limitation réside dans le coût et dans l'encombrement. Elle en comporte de préférence entre 1 et 20.

L'empreinte de la matrice de chauffage est portée à la température adéquate, par exemple entre 50 et 600 ˚C, de préférence entre 300 et 400 ˚C, grâce à un corps de chauffe incorporé dans ladite matrice à proximité de ladite empreinte de manière à assurer une transmission maximum de l'énergie. Il est même prévu, de préférence, deux corps de chauffe, le second se mettant automatiquement en route, en cas de panne du premier. La présence de ce second corps de chauffe est importante pour ne pas être obligé, en cas de panne, d'arrêter toute la ligne de fabrication.

Chaque matrice de chauffage est montée télescopiquement sur la roue d'estampillage : on peut ainsi régler la distance entre les empreintes successives, suivant la longueur du produit plat fabriqué. Il est bien entendu qu'on peut également régler en hauteur la position de l'axe de l'arbre tournant, suivant l'épaisseur du produit plat ou profilé obtenu et compte-tenu de la position des matrices de chauffage.

De manière à réaliser l'empreinte sur un produit bien à plat et toujours au même endroit sur ledit produit, l'appareil selon l'invention comporte de part et d'autre de l'arbre tournant, parallèlement à celui-ci, une paire de rouleaux de synchronisation superposés. Ces quatre rouleaux tournent bien entendu à la même vitesse que l'arbre portant les roues d'estampillage.Il en est de même de l'arbre de coupe ainsi que du rouleau enclume y associé disposés en aval de l'arbre tournant. Tous ces éléments sont entraînés en synchronisme par un moteur unique et possèdent chacun une roue dentée pour l'entraînement à l'aide d'une chaîne.

Si on change la position des empreintes télescopiquement pour varier la longueur du produit, soit on change le diamètre des rouleaux de synchronisation et on adapte la position des couteaux soit on change le rapport de réduction sur les roues dentées des rouleaux de synchronisation et des rouleaux de coupe.

L'appareil selon l'invention réalise un système d'estampillage à haute vitesse en continu, d'encombrement relativement réduit, permettant de réaliser sur des produits plats ou profilés en mouvement une empreinte régulière et de bonne netteté.

On peut prévoir une brosse tournante disposée au dessus de l'arbre tournant avec les empreintes pour les nettoyer et une hotte aspirante pour l'évacuation des fines particules.

La suite de la description est faite en référence aux dessins sur lesquels

Fig. 1    est une vue schématique du dessus de l'appareil selon l'invention avec deux roues d'estampillage,

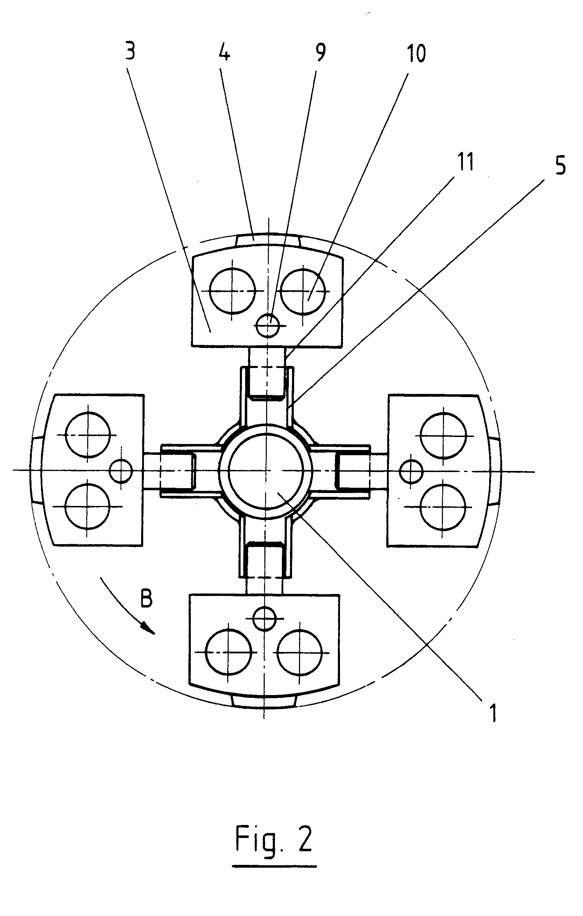

Fig. 2    est une coupe selon la ligne 2-2 de la Fig. 1,

Fig. 3    est une vue de côté de l'appareil selon la Fig. 1.

L'appareil comporte un arbre tournant (1) portant deux roues d'estampillage (2) avec quatre matrices de chauffage (3). Il est prévu sur ces matrices, de préférence en fer chromé, des empreintes adéquates (4). Ces matrices sont télescopiques grâce à leur tige (11) dans des alésages correspondants (5), sur l'arbre (1), à l'aide de deux disques (6) avec fentes (7) coopérant avec des tiges (8) prévues dans les alésages (9) de chaque matrice de chauffage. Les corps de chauffe (10), de préférence en fer, sont alimentés par un collecteur et un système de contrôle (non représentés). Ils sont placés à proximité de l'empreinte (4), de manière à bien transmettre la chaleur.

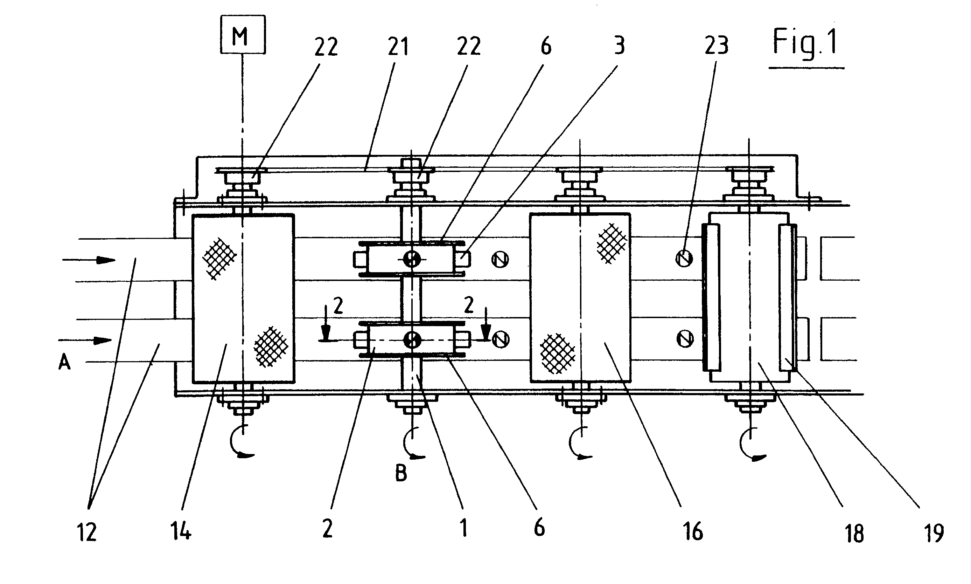

L'arbre (1) tourne dans le sens de la flèche B au dessus des bandes de produit plat (12) se déplaçant dans le sens des flèches (A) (Fig. 1).

De part et d'autre de l'arbre tournant (1) se trouvent des rouleaux de synchronisation (14,15,16,17) dont les axes sont parallèles à celui de l'arbre tournant (1). En aval de l'arbre (1), on dispose un arbre de coupe (18) avec ses couteaux (19) coopérant avec un rouleau enclume (20).

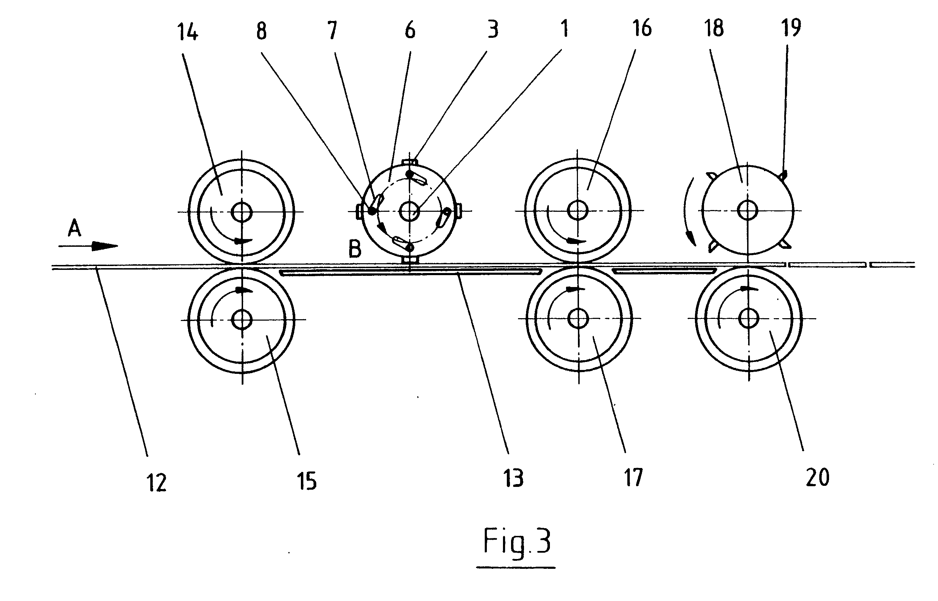

La Fig. 3 indique de manière précise le sens de déplacement de la bande de produit plat (12) et le sens de rotation de tous les rouleaux de l'appareil selon l'invention.

Le fonctionnement de l'appareil est le suivant : un moteur M entraîne en synchronisme grâce à une chaîne (21) l'arbre (1), les rouleaux de synchronisation (14,15,16, 17), l'arbre de coupe (18) et le rouleau enclume (20). La vitesse circonférentielle de tous ces rouleaux est égale à la vitesse de défilement des deux bandes de produit plat (12). L'arbre de chaque rouleau possède une roue dentée (22) sur laquelle s'engage la chaîne (21) pour entraîner tout le système. Les bandes de produit plat arrivent en bonne position grâce aux rouleaux de synchronisation (14) à (17) et passent sur la table support (13) sous le système d'estampillage où ils sont affectés de l'empreinte (23). A la sortie, ils sont coupés à la longueur souhaitée par les couteaux (19). Les produits plats sont alors prêts à être emballés.

Pour déplacer les matrices de chauffage (3) on tourne, l'appareil au repos, les deux disques (6) dans le sens de la flèche B (Fig. 3) de manière à ce que les tiges (8) prises dans les alésages (9) de chaque matrice de chauffage (3) coulissent dans les fentes (7) du disque (6) précité pour ramener chaque matrice plus près du centre de l'arbre (1). Les fentes (7) ont pour ce faire une forme oblongue excentrée par rapport au centre du disque (6). Il est bien entendu que d'autres formes de réalisation pour rendre les matrices de chauffage (3) télescopiques sont également envisageables.

La bande de produit plat ou profilé se déplace à une vitesse comprise entre 0,2 et 1 m/s. On réalise l'empreinte sur le produit plat en une durée de contact de l'estampille de l'ordre du centième de seconde.

On obtient avec l'appareil selon l'invention un produit plat de bonne présentation avec lequel on a une impression de cuisson par le four avec une empreinte vive, claire et précise.

On a aussi avec la machine selon l'invention la possibilité de varier sur le produit le lieu de l'empreinte en faisant varier la position relative des matrices de chauffage sur la roue d'estampillage et des couteaux sur l'arbre de coupe ou en décalant ladite empreinte sur une même bande en décalant les matrices de chauffage sur la largeur de ladite bande à estampiller.

## Revendications

1. Machine à estampiller en continu au moins une bande de produits plats ou profilés (12), caractérisée en ce qu'elle comprend un arbre (1) tournant à une vitesse circonférentielle égale à la vitesse de défilement de la bande (12) et comportant au moins une roue d'estampillage (2) avec au moins une matrice de chauffage (3), ladite roue étant perpendiculaire à l'axe de l'arbre.

2. Machine à estampiller selon la revendication 1, caractérisée en ce que l'arbre comporte entre une et dix roues d'estampillage (2).

3. Machine à estampiller selon l'une des revendications 1 ou 2, caractérisée en ce que chaque roue d'estampillage comporte entre 1 et 20 matrices de chauffage (3).

4. Machine à estampiller selon la revendication 3, caractérisée en ce que chaque matrice de chauffage (3) comporte au moins un corps de chauffe (10).

5. Machine à estampiller selon l'une des revendications 1 à 4, caractérisée en ce que chaque matrice de chauffage (3) est montée télescopiquement sur la roue d'estampillage (2).

6. Machine à estampiller selon l'une quelconque des revendications 1 à 5, caractérisée en ce qu'elle comporte de part et d'autre de l'arbre (1) tournant parallèlement à celui-ci une paire de rouleaux de synchronisation (14-17) superposés.

7. Machine à estampiller selon la revendication 6, caractérisée en ce qu'elle comporte en aval de l'arbre tournant (1) un arbre de coupe (18) ainsi qu'un rouleau enclume (20) placé sous ledit arbre.

8. Machine à estampiller selon l'une quelconque des revendications 1 à 7, caractérisée en ce que l'arbre tournant (1), les rouleaux de synchronisation (14-17), l'arbre de coupe (18) et le rouleau enclume (20) sont entraînés en synchronisme par un moteur unique.

## Claims

1. A machine for continuously stamping at least one strip (12) of flat or shaped products, characterized in that it comprises a shaft (1) rotating at a peripheral speed equal to the rate of advance of the strip (12) and comprising at least one stamping wheel (2) with at least one heating die (3), said wheel being perpendicular to the axis of the shaft.

2. A stamping machine as claimed in claim 1, characterized in that the shaft comprises between one and ten stamping wheels (2).

3. A stamping machine as claimed in claim 1 or 2, characterized in that each stamping wheel comprises between 1 and 20 heating dies (3).

4. A stamping machine as claimed in claim 3, characterized in that each heating matrix (3) comprises at least one heating element (10).

5. A stamping machine as claimed in any of claims 1 to 4, characterized in that each heating die (3) is telescopically mounted on the stamping wheel (2).

6. A stamping machine as claimed in any of claims 1 to 5, characterized in that it comprises a pair of vertically adjacent synchronizing rollers (14-17) on either side of and parallel to the rotating shaft (1).

7. A stamping machine as claimed in claim 6, characterized in that it comprises a cutting shaft (18) downstream of the rotating shaft (1) and an anvil roller (20) disposed beneath said shaft.

8. A stamping machine as claimed in any of claims 1 to 7, characterized in that the rotating shaft (1), the synchronizing rollers (14-17), the cutting shaft (18) and the anvil roller (20) are driven in synchronism by a single motor.

**Patentansprüche**

1. Maschine zum kontinuierlichen Prägen zumindest eines Bandes aus flachen oder profilierten Produkten (12), dadurch gekennzeichnet, daß sie eine Welle (1) aufweist, die mit einer Umfangsgeschwindigkeit gleich der Bewegungsgeschwindigkeit des Bandes (12) dreht und zumindest ein Prägerad (2) mit zumindest einem Heizgesenk (3) aufweist, wobei das Rad zur Achse der Welle senkrecht steht.

2. Prägemaschine nach Anspruch 1, dadurch gekennzeichnet, daß die Welle zwischen 1 und 10 Prägeräder (2) aufweist.

3. Prägemaschine nach Anspruch 1 oder 2, dadurch gekennzeichnet, daß jedes Prägerad zwischen 1 und 20 Heizgesenke (3) trägt.

4. Prägemaschine nach Anspruch 3, dadurch gekennzeichnet, daß jedes Heizgesenk (3) zumindest einen Heizkörper (10) aufweist.

5. Prägemaschine nach einem der Ansprüche 1 bis 4, dadurch gekennzeichnet, daß jedes Heizgesenk (3) teleskopartig am Prägerad (2) montiert ist.

6. Prägemaschine nach einem der Ansprüche 1 bis 5, dadurch gekennzeichnet, daß sie zu beiden Seiten der Welle (1), parallel zu dieser drehend ein Paar von übereinanderliegenden Synchronisierwalzen (14 - 17) aufweist.

7. Prägemaschine nach Anspruch 6, dadurch gekennzeichnet, daß sie stromabwärts der drehenden Welle (1) eine Schneidwelle (18) aufweist sowie eine unter dieser Welle angeordnete Amboßwalze (20).

8. Prägemaschine nach einem der Ansprüche 1 bis 7, dadurch gekennzeichnet, daß die drehende Welle (1), die Synchronisierwalzen (14 - 17), die Schneidwelle (18) und die Amboßwalze (20) von einem einzigen Motor synchron angetrieben sind.

Fig.1

EP 0 256 301 B1

Fig. 2

Fig.3

EP 0 256 301 B1